# FASCICULE DE BREVET EUROPEEN

(11) **EP 4 544 104 B1**
(45) Date de publication et mention de la délivrance du brevet: **05.08.2026**
(21) Numéro de dépôt: 23736176.1
(22) Date de dépôt: 12.06.2023
(51) Int. Cl.: D03D 1/00, D03D 25/00, D03D 13/00, D03D 49/60, B29B 11/16

(54) **PROCEDE DE TISSAGE TRIDIMENSIONNEL D'UNE STRUCTURE FIBREUSE AVEC ORIENTATION DES COLONNES DE TRAME DANS UNE PORTION DE DEPLOIEMENT ET STRUCTURE FIBREUSE RESULTANTE**
VERFAHREN ZUM DREIDIMENSIONALEN WEBEN EINER FASERSTRUKTUR MIT AUSRICHTUNG DER SCHUSSSÄULEN IN EINEM EINSATZABSCHNITT UND RESULTIERENDE FASERSTRUKTUR
METHOD FOR THREE-DIMENSIONAL WEAVING OF A FIBROUS STRUCTURE WITH ORIENTATION OF WEFT COLUMNS IN A DEPLOYMENT PORTION AND RESULTING FIBROUS STRUCTURE

(30) Priorité: 21.06.2022 FR 2206079
(43) Date de publication de la demande: 30.04.2025
(73) Titulaire: Safran Ceramics, 33185 Le Haillan (FR); SAFRAN, 75015 Paris (FR)
(72) Inventeur: PLANCKEEL, Aline, 77550 MOISSY-CRAMAYEL (FR); LEFEBVRE, Marie, 77550 MOISSY-CRAMAYEL (FR); COUPE, Dominique, Marie, Christian, 77550 MOISSY-CRAMAYEL (FR)
(74) Mandataire: Cabinet Beau de Loménie
(86) Numéro de dépôt international: PCT/FR2023/050849
(87) Numéro de publication internationale: WO 2023/247858

(56) Documents cités:
- DE-T2- 60 223 222
- US-A1- 2020 108 569
- US-B2- 10 364 516
- US-B2- 10 519 576

## Description

### Domaine Technique

La présente invention concerne la réalisation de pièces en matériau composite et plus particulièrement la réalisation par tissage tridimensionnel (3D) de structures fibreuses de renfort pour de telles pièces.

### Technique antérieure

Un domaine d'application de l'invention est la réalisation de pièces en matériau composite structural, c'est-à-dire des pièces de structure à renfort fibreux et densifié par une matrice comme des pièces en matériau composite à matrice organique (CMO), à matrice carbone (C/C) et à matrice céramique (CMC). Les matériaux composites à matrice organique (CMO), à matrice carbone (C/C) et à matrice céramique (CMC) viennent en remplacement des pièces en matériau métallique dans certaines parties des turbomachines. Leur utilisation contribue à optimiser les performances des aéronefs notamment par l'amélioration du rendement de la turbomachine et la baisse de la masse globale de la turbomachine, réduisant de manière significative les émissions nocives pour l'environnement (CO,CO₂, NOx, ...).

L'invention concerne plus particulièrement les structures fibreuses de renfort obtenues par tissage tridimensionnel et qui comprennent une ou plusieurs portions de déploiement, c'est-à-dire une ou plusieurs parties destinées à être déployées lors de la mise en forme d'une structure fibreuse.

Un exemple de ce type de structure fibreuse est celle utilisée pour former le renfort fibreux d'un secteur d'anneau de turbine en matériau composite comme notamment divulgué dans le document US2012027572.

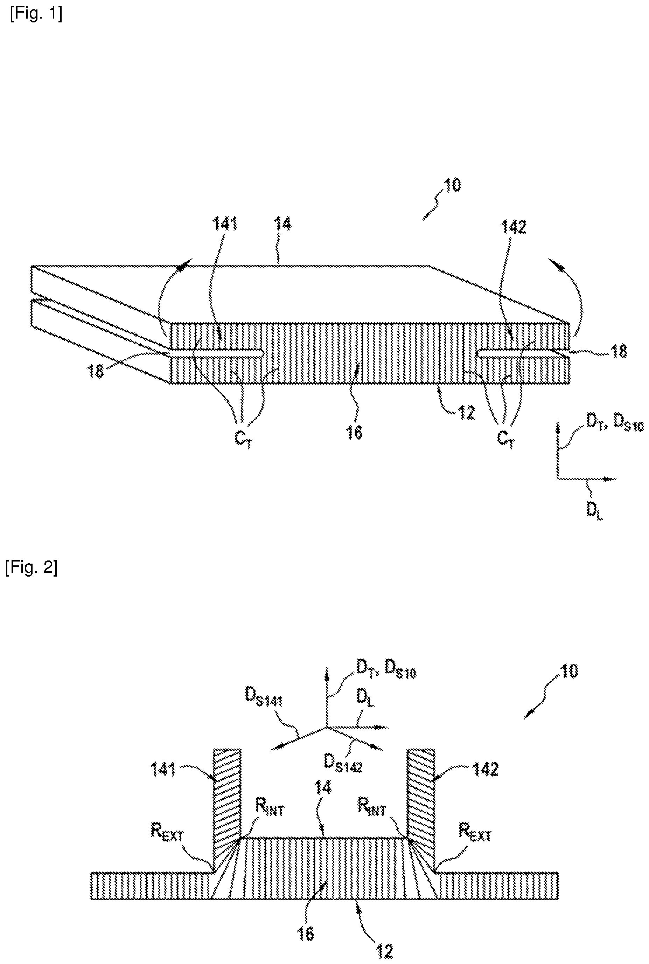

La figure 1 illustre une structure fibreuse 10 destinée à former le renfort fibreux d'un secteur d'anneau de turbine en matériau composite. La structure 10 est obtenue par tissage tridimensionnel entre une pluralité de couches de fils de chaîne et une pluralité de couches de fils de trame, les fils de chaîne s'étendant suivant une direction longitudinale D_{L} et les fils de trame s'étendant suivant une direction transversale D_{T}. Les fils de trame sont tissés en une pluralité de colonnes représentées ici par des lignes C_{T}. Les colonnes de fils de trame C_{T} sont espacées les unes de autres suivant la direction longitudinale D_{L}, les fils de trame de chaque colonne de fils de trame étant juxtaposés dans l'épaisseur de la structure fibreuse suivant une direction de superposition D_{S10} perpendiculaire à la direction longitudinale D_{L}.

La structure 10 comprend une partie inférieure 12 destinée à former la base du secteur d'anneau, et une partie supérieure 14 reliée à la partie inférieure 12 par une portion centrale 16. La partie supérieure 14 comprend deux portions de déploiement 141 et 142 présentes aux extrémités latérales opposées de la portion centrale 16 et qui ne sont pas liées avec la partie inférieure 12. En d'autres termes, la structure fibreuse 10 comprend deux zones de déliaison 18 au niveau de deux bords opposés dans une direction transversale de la structure 10, de façon à laisser deux portions de déploiement libres.

La figure 2 illustre la mise en forme de la structure fibreuse 10 par pliage à 90° des portions de déploiement 141 et 142 vers la portion centrale 16 de façon à former, après densification, des brides d'accroche du secteur d'anneau sur une structure de support d'anneau dans une turbine. Après pliage, la direction de superposition des fils de trames des colonnes de trames présentes dans les portions de déploiement 141 et 142 est modifiée. Plus précisément, les directions de superposition DS₁₄₁ et DS₁₄₂ des fils de trames des colonnes de trames respectivement des portions de déploiement 141 et 142 présentent une variation angulaire significative par rapport à leur direction de superposition initiale DS₁₀. Cette variation angulaire résulte des forces de cisaillement qui s'exercent dans les portions de déploiement 141 et 142 lors de leur déploiement, le cheminement au niveau du rayon interne R_{INT} étant plus court que le cheminement du rayon externe R_{EXT}.

Ce décalage angulaire dans les colonnes de fils de trame entraîne un décollement dans la structure fibreuse au niveau du rayon interne, ce qui est dommageable pour la pièce finie car cela crée une zone dépourvue de renfort fibreux. En outre, le décalage angulaire entraîne un décadrage dans les portions concernées qui peut modifier les propriétés mécaniques définies initialement.

Les documents US 10 519 576, US 2020/108569, US 10 364 516 et DE 602 23 22 décrivent des procédés de fabrication de pièces en matériau composite comprenant le tissage tridimensionnel d'un renfort fibreux pour les pièces.

### Exposé de l'invention

Il est donc souhaitable de pouvoir disposer d'une solution pour la réalisation de structures fibreuses ne présentant pas les inconvénients précités.

A cet effet, la présente invention propose un procédé de tissage tridimensionnel en une seule pièce d'une structure fibreuse entre une pluralité de couches de fils de chaîne et une pluralité de couches de fils de trame, les fils de chaîne s'étendant suivant une direction longitudinale correspondant à la direction d'avancement desdits fils de chaîne, les fils de trame s'étendant suivant une direction transversale, les fils de trame étant tissés en une pluralité de colonnes espacées les unes de autres suivant la direction longitudinale, chaque colonne de fils de trame étant positionnée contre la façure de la structure fibreuse, les fils de trame de chaque colonne de fils de trame étant juxtaposés dans l'épaisseur de la structure fibreuse suivant une direction de superposition déterminée, le procédé comprenant le tissage d'au moins une portion de déploiement dans la structure fibreuse, ladite au moins une portion de déploiement étant liée par tissage à une ou plusieurs portions adjacentes de la structure fibreuse, les fils de trame des colonnes de fils de trame de la ou les portions adjacentes étant juxtaposés suivant une première direction de superposition perpendiculaire à la direction longitudinale, caractérisé en ce que, lors du tissage de ladite au moins une portion de déploiement, les fils de trame de chaque colonne de fils de trame sont juxtaposés suivant une deuxième direction de superposition différente de la première direction de superposition.

On forme ainsi une structure fibreuse comprenant une ou plusieurs portions de déploiement dans lesquelles les fils de trame dans les colonnes de fils de trame sont juxtaposés suivant une direction de superposition formant un angle avec la direction longitudinale différent de 90° qui est apte à compenser la variation angulaire imposée lors du pliage de la ou les portions de déploiement. Ainsi, après pliage de la ou les portions de déploiement, la variation angulaire résultant des forces de cisaillement qui s'exercent dans celles-ci lors de leur déploiement entraîne le redressement horizontal des colonnes de fils de trame dans ces portions et évite un décollement dans la structure fibreuse au niveau du rayon interne.

Selon une caractéristique particulière du procédé de l'invention, la deuxième direction de superposition forme un angle avec la direction longitudinale compris entre 60° et 80°, plus préférentiellement un angled'environ 70°.

L'invention a également pour objet un procédé de fabrication d'une pièce en matériau composite comprenant :
- le tissage d'une structure fibreuse conformément au procédé de tissage selon l'invention,
- la mise en forme de la structure fibreuse par pliage de ladite au moins une portion de déploiement de manière à obtenir une préforme fibreuse,
- la densification de la préforme fibreuse par une matrice.

Le procédé de fabrication d'une pièce en matériau composite selon l'invention peut être utilisé pour la fabrication d'un secteur d'anneau de turbine, d'un raidisseur ou d'une aube de turbomachine fixe ou mobile.

L'invention a également pour objet une structure fibreuse présentant un tissage tridimensionnel entre une pluralité de couches de fils de chaîne et une pluralité de couches de fils de trame, les fils de chaîne s'étendant suivant une direction longitudinale, les fils de trame s'étendant suivant une direction transversale, la structure comprenant une pluralité de colonnes de fils de trame espacées les unes de autres suivant la direction longitudinale, les fils de trame de chaque colonne de fils de trame étant juxtaposés dans l'épaisseur de la structure fibreuse suivant une direction de superposition déterminée, la structure fibreuse comprenant au moins une portion de déploiement liée par tissage à une ou plusieurs portions adjacentes de la structure fibreuse, les fils de trame des colonnes de fils de trame de la ou les portions adjacentes étant juxtaposés suivant une première direction de superposition perpendiculaire à la direction longitudinale, caractérisée en ce que les fils de trame de chaque colonne de fils de trame dans ladite au moins une portion de déploiement sont juxtaposés suivant une deuxième direction de superposition différente de la première direction de superposition.

Selon une caractéristique particulière de la structure de l'invention, la deuxième direction de superposition forme un angle avec la direction longitudinale compris entre 60° et 80°, plus préférentiellement un angled'environ 70°.

L'invention concerne encore une pièce en matériau composite comprenant un renfort fibreux densifié par une matrice caractérisée en ce que le renfort fibreux comprend une structure fibreuse selon l'invention.

Selon une caractéristique particulière de la pièce de l'invention, celle-ci correspond à un secteur d'anneau de turbine, un raidisseur ou une aube de turbomachine fixe ou mobile.

### Brève description des dessins

[Fig. 1] La figure 1 est une vue schématique en perspective d'une structure fibreuse selon l'art antérieur,
[Fig. 2] La figure 2 est une vue schématique de face montrant la structure de la figure 1 après mise en forme,
[Fig. 3] La figure 3 est une vue schématique en perspective d'un métier à tisser de type Jacquard selon un mode de réalisation de l'invention,
[Fig. 4] La figure 4 est une vue de côté du métier à tisser de la figure 3 montrant le tissage d'une première partie de la structure fibreuse de la figure 7,
[Fig. 5] La figure 5 est une vue de côté du métier à tisser de la figure 3 montrant le tissage d'une deuxième partie de la structure fibreuse de la figure 7,
[Fig. 6] La figure 6 est une vue de côté du métier à tisser de la figure 3 montrant le tissage d'une troisième partie de la structure fibreuse de la figure 7,
[Fig. 7] La figure 7 est une vue schématique de face d'une structure fibreuse conformément à un mode de réalisation de l'invention.
[Fig. 8] La figure 8 est une vue schématique de face de la structure fibreuse de la figure 7 après mise en forme.

### Description des modes de réalisation

L'invention s'applique d'une manière générale à la réalisation de structures fibreuses ou tissus par tissage tridimensionnel (3D) entre des couches de fils de chaîne et des couches de fils de trame, la structure comprenant au moins une portion destinée à être déployer lors de sa mise en forme. Par « tissage tridimensionnel » ou « tissage 3D », on entend ici un mode de tissage par lequel certains au moins des fils de trame lient des fils de chaîne sur plusieurs couches de fils de chaîne ou inversement. Un exemple de tissage tridimensionnel est le tissage dit à armure « interlock ». Par tissage « interlock », on entend ici une armure de tissage dans laquelle chaque couche de fils de chaîne lie plusieurs couches de fils de trame avec tous les fils d'une même colonne de chaîne ayant le même mouvement dans le plan de l'armure. Les fils utilisés ici peuvent être notamment des fils en fibres de carbone ou des fils en fibres céramiques tels que des fibres de carbure de silicium (SiC), l'invention n'étant pas limitée à ces seules natures de fils.

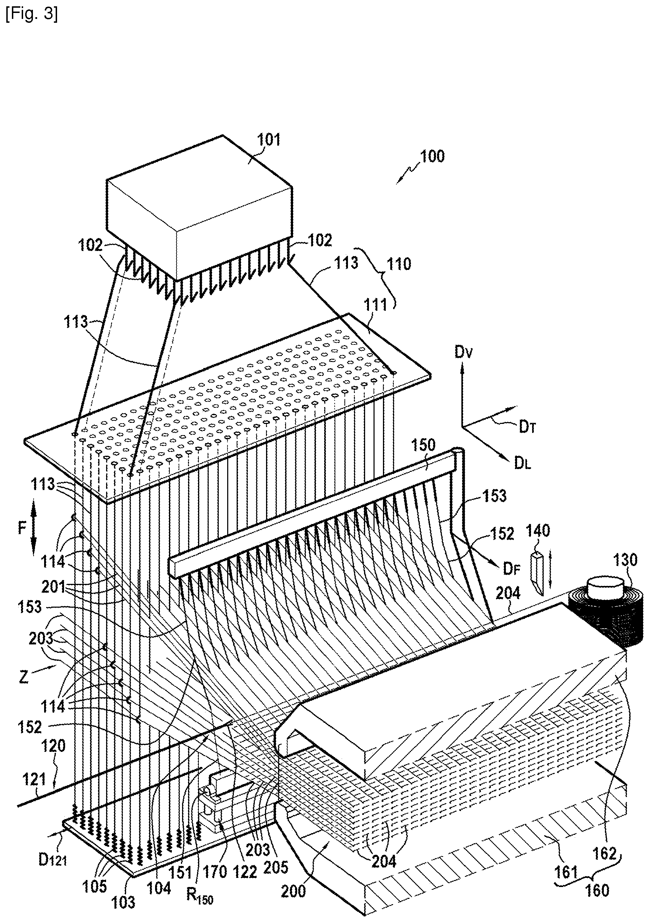

La figure 3 illustre un métier à tisser 100 permettant de réaliser une structure fibreuse conformément à un mode de réalisation de l'invention. Le métier à tisser 100 est équipé d'une mécanique Jacquard 101 supportée par une superstructure non représentée sur la figure 3. Le métier 100 comprend également un harnais 110 constitué d'une planche d'empoutage 111 et des fils de commande ou lisses 113, chaque lisse 113 étant reliée à une extrémité à un crochet de commande 102 de la mécanique Jacquard 101 et à l'autre extrémité à un des ressorts de rappel 105 fixés au bâti 103 du métier à tisser 100. Chaque lisse 113 comprend un œillet 114 traversé par un fil de chaîne 203. Les fils de chaîne 201 sont organisés au niveau du harnais 110 du métier à tisser en une pluralité de couches et de colonnes qui sont, comme expliqué ci-après, manipulées par le métier à tisser afin de permettre l'insertion de fils de trames 204 suivant le ou les motifs de tissage programmés dans le métier à tisser. Les fils de chaîne 203 s'étendent suivant une direction longitudinale D_{L} correspondant à leur direction d'avancée lors du tissage. Les fils de trame 204 sont insérés entre les fils de chaîne par colonne suivant une direction transversale D_{T} perpendiculaire à la direction longitudinale D_{L}. Afin de permettre l'introduction de chaque colonne de fils de trame lors du tissage de la structure fibreuse, un système d'appel des fils de chaîne (non représenté sur la figure 3) est associé au métier à tisser. Ce système, placé en aval du métier à tisser, a pour rôle de maintenir tous les fils de chaîne ensemble dans un dispositif de bridage et de permettre l'avancé des fils de chaîne d'une distance déterminée après l'insertion de chaque colonne de trame.

Les lisses 113 et leur œillet 114 associé s'étendent dans une zone Z dans laquelle les lisses 113 et les œillets 114 sont animés d'un mouvement d'oscillation sensiblement vertical représenté par la double flèche F. Lors de la création d'une foule, comme illustrée sur la figure 3, une partie des lisses 113 est soumise à des efforts de traction exercés par les crochets de commande 102. Dans cette configuration, les lisses 113 permettent de soulever certains fils de chaîne 203 et de créer ainsi une foule 104 permettant le passage d'une lance 120 pour l'introduction de fils de trame 204.

La lance 120, présente en aval des lisses 113, est composée d'une tige 121 dont une première extrémité est reliée à un système d'actionnement (non représenté sur la figure 3) permettant d'animer la tige 121 d'un mouvement de va-et-vient suivant la double direction D₁₂₁**.** L'autre extrémité de la tige 121 est munie d'une pince 122 qui, après avoir traversé la foule 104 lors du trajet aller de la tige 121, vient saisir un fil de trame 204 stocké sur une bobine 130 pour le dérouler dans la foule 104 lors du trajet retour de la tige 121. Le fil de trame 204 ainsi placé à l'intérieur de la foule 104 est coupé au voisinage de la bobine 130 par un couteau 140 et libéré à son autre extrémité par la pince 122.

Un peigne 150 présent en amont de la lance 120 dans sa position de repos est alors rabattu afin de tasser le ou les fils de trame introduits dans la foule 104 contre la façure 205 d'une structure fibreuse 200. La lance 120 est alors prête pour saisir à nouveau un nouveau fil de trame 204 à partir de la bobine 130 et le placer soit à nouveau dans la foule 104, soit dans une foule différente en fonction du tissage défini. On forme ainsi progressivement une structure fibreuse 200 présentant un tissage 3D entre les fils de chaîne 203 et les fils de trame 204.

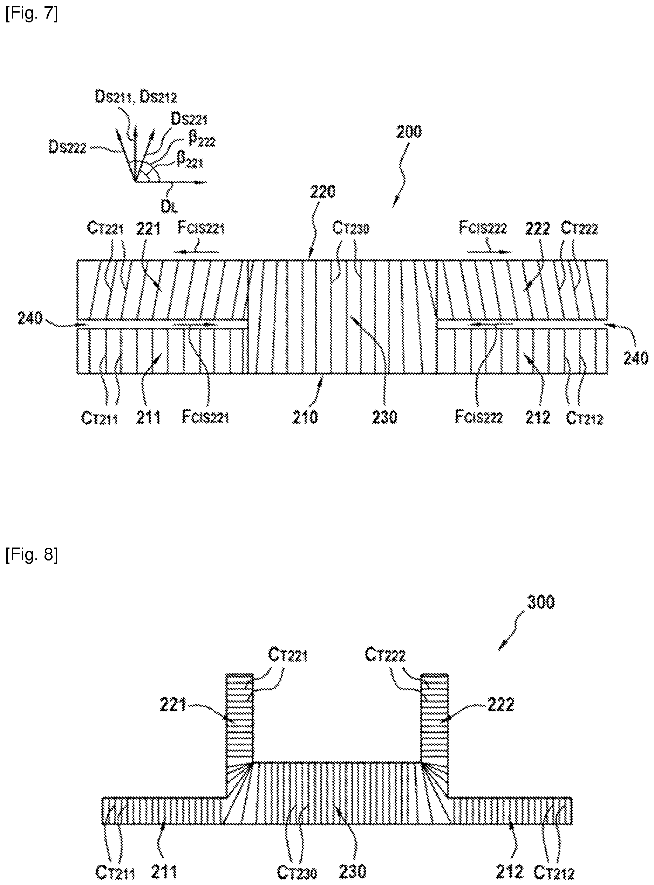

On décrit maintenant un procédé de tissage d'une structure fibreuse 200 conformément à un mode de réalisation. Dans l'exemple décrit ici, la structure fibreuse 200 est destinée à former le renfort fibreux d'un secteur d'anneau de turbine en matériau composite. Comme illustrée sur la figure 7, la structure fibreuse 200 présente une fois tissée une partie inférieure 210 destinée à former la base du secteur d'anneau, et une partie supérieure 220 reliée à la partie inférieure 210 par une portion centrale 230. La partie supérieure 220 comprend deux portions de déploiement 221 et 222 présentes aux extrémités latérales opposées de la portion centrale 230 en vis-à-vis respectivement avec deux portions de base 211 et 212 de la partie inférieure 210 présentes aux extrémités latérales opposées de la portion centrale 230. Les portions de déploiement 221 et 222 ne sont pas liées avec les portions de base 211 et 212 de la partie inférieure 212, deux zones de déliaison 240 étant ménagées lors du tissage dans la structure fibreuse au niveau de deux bords opposés dans une direction transversale de la structure 200, de façon à laisser deux portions de déploiement libres.

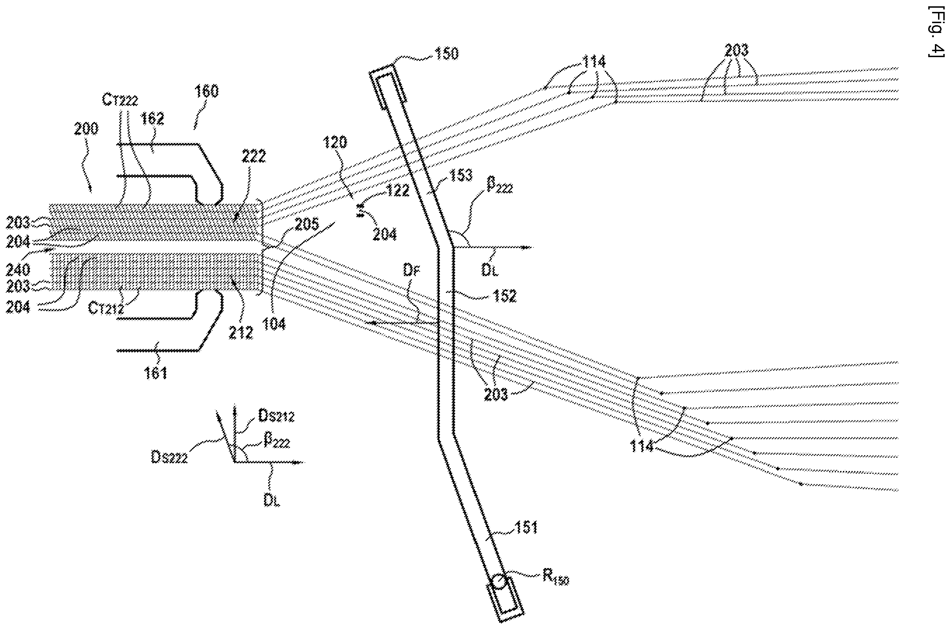

La figure 4 montre le début du tissage de la structure fibreuse 200, à savoir le tissage de la portion de base 212 et de la portion de déploiement 222. Les portions 222 et 212 sont chacune formées par tissage 3D entre une pluralité de couches de fils de chaîne 203 et une pluralité de couches de fils de trame 204. Les fils de trame sont tissés dans les portions 222 et 212 en une pluralité de colonnes C_{T222} et C_{T212} espacées les unes de autres suivant la direction longitudinale D_{L}. Les fils de trame de chaque colonne de fils de trame C_{T212} de la portion inférieure 212 sont juxtaposés dans l'épaisseur de la structure fibreuse suivant une direction de superposition déterminée D_{S212} perpendiculaire à la direction longitudinale D_{L}. Lors du tissage des portions 212 et 222, les fils de trame présents dans la portion de déploiement 222 ne s'étendent pas dans la portion de base 212 et inversement de manière à former une zone de déliaison 240 entre ces deux portions.

Conformément à l'invention, les fils de trame 204 de chaque colonne de fils de trame C_{T222} de la portion de déploiement 222 sont positionnés contre la façure 205 de la structure fibreuse 200 suivant une deuxième direction de superposition D_{S222} différente de la direction de superposition D_{S212}. La direction de superposition des fils de trame dans chaque colonne de trame peut être ajustée avec le peigne 150. En effet, l'angle avec lequel le peigne frappe les fils de trame contre la façure 205 de la structure fibreuse 200 détermine la direction de superposition des fils de trame dans chaque colonne de fils de trame. Dans la présente invention, on utilise un peigne orientable afin de régler l'angle de frappe de celui-ci sur la façure de la structure fibreuse tissée en fonction de la direction de superposition que l'on souhaite obtenir dans chaque colonne de fils de trame. La direction de frappe du peigne est parallèle à la direction longitudinale D_{L}.

Dans l'exemple décrit ici, le peigne 150 comprend des première, deuxième et troisième parties fixes 151, 152 et 153 formant un angle entre elles. Le peigne 150 est monté sur un axe de rotation R₁₅₀ présent ici à l'extrémité inferieure de la partie fixe 151. Le peigne 150 est en outre monté sur un mécanisme de positionnement 170 aptes à d'ajuster la position du peigne suivant une direction verticale D_{V} et sur un mécanisme de frappe (non représenté sur les figures 3, 4, 5 et 6) permettant de frapper la façure 205 de la structure fibreuse suivant une direction de frappe D_{F} parallèle à la direction longitudinale D_{L}.

Lors du tissage de la portion de base 212 et de la portion de déploiement 222, le peigne 150 est orienté autour de son axe de rotation R₁₅₀ de manière à ce que la deuxième partie fixe 152 soit perpendiculaire à la direction longitudinale D_{L} tandis que la troisième partie fixe 153 forme un angle β₂₂₂ avec la direction longitudinale D_{L} qui est supérieur à 90°. Le peigne 150 est positiomé suivant la direction verticale D_{V} de manière à ce que les première et deuxième parties fixes 151 et 152 soient en regard respectivement de la portion de base 212 et de la portion de déploiement 222. Ainsi, à chaque frappe du peigne 150 suivant la direction de frappe D_{F}, les fils de trame de la portion de base 212 sont juxtaposés dans chaque colonne de fil de trame suivant la direction de superposition D_{S212} qui est perpendiculaire à la direction longitudinale tandis que les fils de trame de la portion de déploiement 222 sont juxtaposés dans chaque colonne de fil de trame suivant la direction de superposition D_{S222} formant l'angle β₂₂₂ avec la direction longitudinale D_{L}.

La valeur de l'angle β₂₂₂ est déterminée de manière à compenser, c'est-à-dire annuler, la variation angulaire imposée à la portion de déploiement 222 par les forces de cisaillement lors de sa mise en forme par pliage.

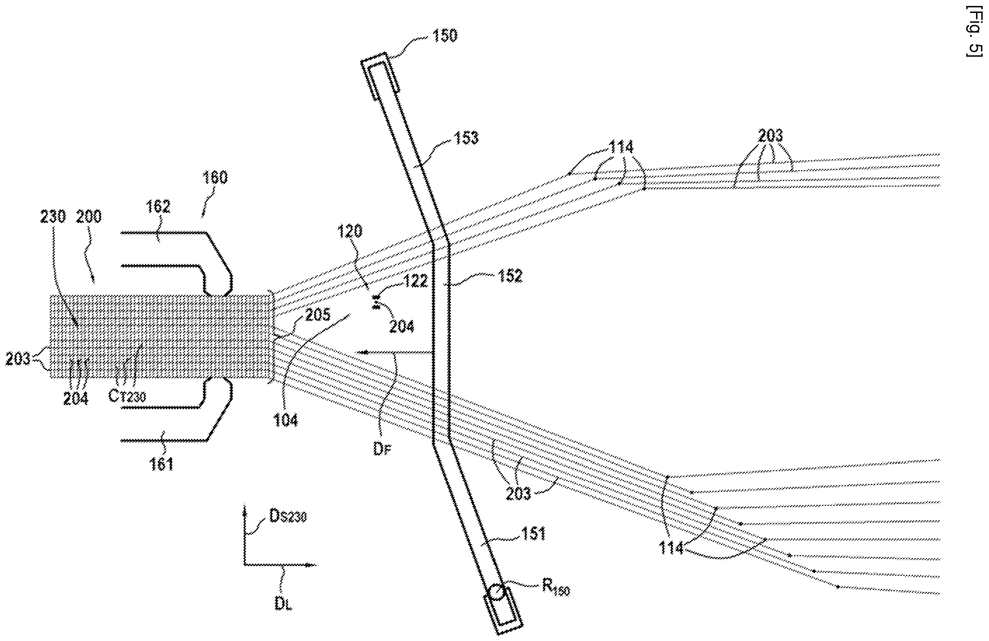

La figure 5 le tissage de la portion centrale 230 de la structure fibreuse 200. La portion centrale 230 est formée par tissage 3D entre la pluralité de couches de fils de chaîne 203 et la pluralité de couches de fils de trame 204 dans la continuité de la portion de base 212 et de la portion de déploiement 222. Les fils de trame sont tissés dans la portion 230 en une pluralité de colonnes C_{T230} espacées les unes de autres suivant la direction longitudinale D_{L}. Les fils de trame de chaque colonne de fils de trame C_{T230} de la portion inférieure 212 sont juxtaposés dans l'épaisseur de la structure fibreuse suivant une direction de superposition déterminée D_{S230} perpendiculaire à la direction longitudinale D_{L}.

Lors du tissage de la portion centrale 230, le peigne 150 est orienté autour de son axe de rotation R₁₅₀ de manière à ce que la deuxième partie fixe 152 soit perpendiculaire à la direction longitudinale. Le peigne 150 est positionné suivant la direction verticale D_{V} de manière à ce que la deuxième partie fixe 152 soit en regard de la portion centrale 230. Ainsi, à chaque frappe du peigne 150 sur la façure 205 de la structure fibreuse 200 suivant la direction de frappe D_{F}, les fils de trame de la portion centrale 230 sont juxtaposés dans chaque colonne de fil de trame suivant la direction de superposition D_{S230} qui est perpendiculaire à la direction longitudinale D_{L}.

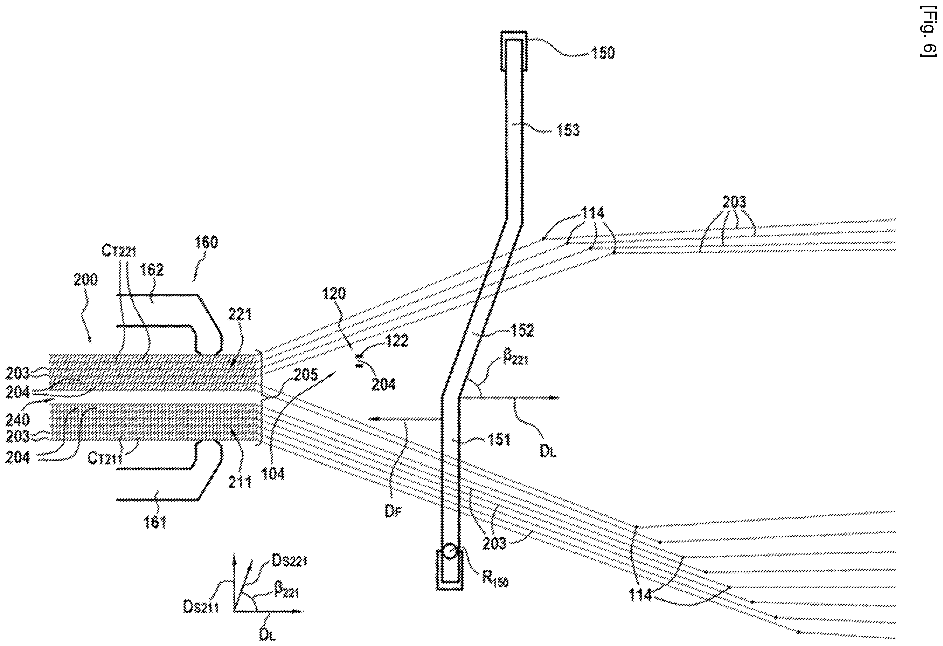

La figure 6 montre le tissage de la portion de base 211 et de la portion de déploiement 221. Les portions 221 et 211 sont chacune formées par tissage 3D entre la pluralité de couches de fils de chaîne 203 et la pluralité de couches de fils de trame 204 dans la continuité de la portion centrale 230. Les fils de trame sont tissés dans les portions 221 et 211 en une pluralité de colonnes C_{T221} et C_{T211} espacées les unes de autres suivant la direction longitudinale D_{L}. Les fils de trame de chaque colonne de fils de trame C_{T211} de la portion inférieure 211 sont juxtaposés dans l'épaisseur de la structure fibreuse suivant une direction de superposition déterminée D_{S211} perpendiculaire à la direction longitudinale D_{L}. Lors du tissage des portions 211 et 221, les fils de trame présents dans la portion de déploiement 221 ne s'étendent pas dans la portion de base 211 et inversement de manière à former une zone de déliaison 240 entre ces deux portions.

Conformément à l'invention, les fils de trame 204 de chaque colonne de fils de trame C_{T221} de la portion de déploiement 221 sont positionnés contre la façure 205 de la structure fibreuse 200 suivant une deuxième direction de superposition D_{S221} différente de la direction de superposition D_{S211}.

Lors du tissage de la portion de base 211 et de la portion de déploiement 221, le peigne 150 est orienté autour de son axe de rotation R₁₅₀ de manière à ce que la première partie fixe 151 soit perpendiculaire à la direction longitudinale tandis que la deuxième partie fixe 152 forme un angle β₂₂₁ avec la direction longitudinale D_{L} qui est inférieur à 90°. Le peigne 150 est positionné suivant la direction verticale D_{V} de manière à ce que les première et deuxième parties fixes 151 et 152 soient en regard respectivement de la portion de base 211 et de la portion de déploiement 221. Ainsi, à chaque frappe du peigne 150 suivant la direction de frappe D_{F}, les fils de trame de la portion de base 211 sont juxtaposés dans chaque colonne de fil de trame suivant la direction de superposition D_{S211} qui est perpendiculaire à la direction longitudinale tandis que les fils de trame de la portion de déploiement 221 sont juxtaposés dans chaque colonne de fil de trame suivant la direction de superposition D_{S221} formant l'angle β₂₂₁ avec la direction longitudinale D_{L}.

La valeur de l'angle β₂₂₁ est déterminée de manière à compenser, c'est-à-dire annuler, la variation angulaire imposée à la portion de déploiement 221 par les forces de cisaillement lors de sa mise en forme par pliage.

A la fin du tissage on obtient la structure fibreuse 200 illustrée à la figure 7 avec des portions de déploiement 221 et 222 dans lesquelles les fils de trame dans les colonnes de fils de trame de fils de trame C_{T221} et C_{T221} sont juxtaposés suivant respectivement des directions de superposition D_{S221} et D_{S222} formant des angles β₂₂₁ et β₂₂₂ avec la direction longitudinale qui sont différents de 90° aptes à compenser la variation angulaire imposée lors du pliage des portions de déploiement 221 et 222. La valeur des angles β₂₂₁ et β₂₂₂ entre les directions de superposition DS221 et DS222 et la direction longitudinale D_{L} est comprise entre 60° et 80°, plus préférentiellement un angle d'environ 70°.

Cette compensation est illustrée sur la figure 8 qui montre une préforme 300 obtenue par la mise en forme de la structure fibreuse 200, c'est-à-dire, après pliage des portions de déploiement 221 et 222 à 90° par rapport aux portions de base 211 et 212 et la portion centrale 230. La variation angulaire résultant des forces de cisaillement F_{CIS221} et F_{CIS222} qui s'exercent dans les portions de déploiement 221 et 222 (figure 7) lors de leur déploiement entraîne le redressement horizontal des colonnes de fils de trame dans ces portions et évite un décollement dans la structure fibreuse au niveau du rayon interne.

L'exemple qui vient d'être décrit concerne une structure fibreuse avec plusieurs portions de déploiement tissées en même temps que des portions de base avec une déliaison entre les portions de déploiement et les portions de base. L'invention s'applique bien entendu à des structures fibreuses ayant des architectures différentes en particulier plus simples. Le procédé de tissage de l'invention peut être appliqué au tissage d'une structure fibreuse comprenant suivant une direction longitudinale une portion de base prolongée par une portion de déploiement destinée à être pliée lors de la mise en forme de la structure fibreuse afin de former une préforme en forme de L, par exemple dans le cas de la fabrication d'un raidisseur en matériau composite.

D'une manière générale, le peigne peut comprendre une ou plusieurs parties fixes tout en étant orientable suivant un axe de rotation. Dans le cas d'une structure fibreuse comprenant suivant une direction longitudinale une portion de base prolongée par une portion de déploiement destinée à être pliée lors de la mise en forme de la structure fibreuse comme décrite ci-avant, le peigne ne peut comprendre qu'une seule partie fixe qui est orientée différemment selon que l'on tisse la portion de base ou la portion de déploiement. Ainsi, lors du tissage de la portion de déploiement, le peigne est orienté autour de son axe de rotation de manière à ce que la partie fixe forme avec la direction longitudinale de la structure ou la direction d'avancement des fils de chaîne un angle différente de 90° déterminé de manière à compenser, c'est-à-dire annuler, la variation angulaire imposée à la portion de déploiement par les forces de cisaillement lors de sa mise en forme par pliage. Lors du tissage de la portion de base, le peigne est orienté autour de son axe de rotation de manière à ce que la partie fixe soit perpendiculaire à la direction longitudinale ou la direction d'avancement des fils de chaîne.

Selon une caractéristique particulière de l'invention, le positionnement vertical relatif du peigne par rapport à la façure de la structure fibreuse peut être également réalisé en tout ou partie par un dispositif de maintien de la structure fibreuse tissée 200 présent en aval des lisses 113 et de la lance 120. Dans l'exemple décrit ici, le dispositif de maintien 160 comprend une mâchoire inférieure 161 et une mâchoire supérieure 162 chacune reliée à un moyen d'actionnement (non représentée sur les figures 3 à 6) qui est apte à maintenir la structure tissée 200, d'une part, et à déplacer les mâchoires 160 et 161 suivant la direction verticale D_{V}. Le dispositif de maintien 160 permet de déplacer la façure 205 de la structure tissée suivant la direction verticale D_{V} vers le haut ou vers le bas par rapport au peigne 150. Dans ce cas d'un métier à tisser comprenant le dispositif de maintien, le positionnement vertical relatif du peigne par rapport à la façure de la structure fibreuse peut être réalisé par le dispositif de maintien ou par des mouvements combinés du peigne et du dispositif de maintien.

On procède ensuite à la densification de la préforme fibreuse 300 afin de former une pièce en matériau composite, dans l'exemple décrit ici un secteur d'anneau de turbine à gaz. La densification de la préforme fibreuse destinée à former le renfort fibreux de la pièce à fabriquer consiste à combler la porosité de la préforme, dans tout ou partie du volume de celle-ci, par le matériau constitutif de la matrice. Cette densification peut être réalisée de façon connue en soi suivant le procédé par voie liquide (CVL) ou le procédé par voie gazeuse (CVI), ou le procédé d'injection de charge céramique (Slurry Cast) ou le procédé d'imprégnation d'un alliage de silicium (MI ou RMI) ou encore suivant un enchaînement d'un ou plusieurs de ces procédés.

Le procédé par voie liquide consiste à imprégner la préforme par une composition liquide contenant un précurseur du matériau de la matrice. Le précurseur se présente habituellement sous forme d'un polymère, tel qu'une résine époxyde à hautes performances, éventuellement dilué dans un solvant. La préforme est placée dans un moule pouvant être fermé de manière étanche avec un logement ayant la forme de l'aube finale moulée. Ensuite, on referme le moule et on injecte le précurseur liquide de matrice (par exemple une résine) dans tout le logement pour imprégner toute la partie fibreuse de la préforme.

La transformation du précurseur en matrice, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser.

Dans le cas de la formation d'une matrice carbone ou céramique, le traitement thermique consiste à pyrolyser le précurseur pour transformer la matrice en une matrice carbone ou céramique selon le précurseur utilisé et les conditions de pyrolyse. A titre d'exemple, des précurseurs liquides de céramique, notamment de SiC ou SiCN, peuvent être des résines de type polycarbosilane (PCS) ou polytitanocarbosilane (PTCS) ou polysilazane (PSZ), tandis que des précurseurs liquides de carbone peuvent être des résines à taux de coke relativement élevé, telles que des résines phénoliques. Plusieurs cycles consécutifs, depuis l'imprégnation jusqu'au traitement thermique, peuvent être réalisés pour parvenir au degré de densification souhaité.

Dans le cas notamment de la formation d'une matrice organique, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme extérieure de la pièce à réaliser. Une résine thermodurcissable est injectée dans l'espace interne du moule qui comprend la préforme fibreuse. Un gradient de pression est généralement établi dans cet espace interne entre l'endroit où est injectée la résine et les orifices d'évacuation de cette dernière afin de contrôler et d'optimiser l'imprégnation de la préforme par la résine.

La densification de la préforme peut encore être réalisée par imprégnation de polymère et pyrolyse (PIP), ou par imprégnation d'une barbotine (« slurry cast »), contenant par exemple du SiC et des liants organiques, suivie d'une infiltration avec du silicium liquide (« Melt infiltration »).

La densification de la préforme fibreuse peut-être également réalisée, de façon connue, par voie gazeuse par infiltration chimique en phase vapeur de la matrice (CVI). La préforme fibreuse correspondant au renfort fibreux de l'aube à réaliser est placée dans un four dans lequel est admise une phase gazeuse réactionnelle. La pression et la température régnant dans le four et la composition de la phase gazeuse sont choisies de manière à permettre la diffusion de la phase gazeuse au sein de la porosité de la préforme pour y former la matrice par dépôt, au cœur du matériau au contact des fibres, d'un matériau solide résultant d'une décomposition d'un constituant de la phase gazeuse ou d'une réaction entre plusieurs constituants, contrairement aux conditions de pression et températures propres aux procédés CVD ("Chemical Vapor Deposition") qui conduisent exclusivement à un dépôt à la surface du matériau.

La formation d'une matrice SiC peut être obtenue avec du méthyltrichlorosilane (MTS) donnant du SiC par décomposition du MTS tandis qu'une matrice carbone peut être obtenue avec des gaz hydrocarbures tels que méthane et/ou propane donnant le carbone par craquage.

Une densification combinant voie liquide et voie gazeuse peut être également utilisée pour faciliter la mise en œuvre, limiter les coûts et les cycles de fabrication tout en obtenant des caractéristiques satisfaisantes pour l'utilisation envisagée.

Les procédés de densification décrits ci-avant permettent de réaliser, à partir de la structure fibreuse de l'invention, principalement des pièces en matériau composite à matrice organique (CMO), à matrice carbone (C/C) et à matrice céramique (CMC). Les matériaux composites à matrice organique (CMO), à matrice carbone (C/C) et à matrice céramique (CMC) viennent en remplacement des pièces en matériau métallique dans certaines parties des turbomachines. Leur utilisation contribue à optimiser les performances des aéronefs notamment par l'amélioration du rendement de la turbomachine et la baisse de la masse globale de la turbomachine, réduisant de manière significative les émissions nocives pour l'environnement (CO,CO₂, NOx, ...).

Après densification, on obtient une pièce en matériau composite.

La structure fibreuse et son procédé de fabrication selon la présente invention peuvent notamment être utilisés pour réaliser des secteurs d'anneau de turbine, des raidisseurs, des aubes de turbomachine fixes ou mobiles.

## Revendications

1. Procédé de tissage tridimensionnel en une seule pièce d'une structure fibreuse (200) entre une pluralité de couches de fils de chaîne (203) et une pluralité de couches de fils de trame (204), les fils de chaîne s'étendant suivant une direction longitudinale (D_{L}) correspondant à la direction d'avancement desdits fils de chaîne, les fils de trame s'étendant suivant une direction transversale (D_{T}), les fils de trame (204) étant tissés en une pluralité de colonnes espacées les unes de autres suivant la direction longitudinale, chaque colonne de fils de trame étant positionnée contre la façure de la structure fibreuse, les fils de trame de chaque colonne de fils de trame étant juxtaposés dans l'épaisseur de la structure fibreuse suivant une direction de superposition déterminée, le procédé comprenant le tissage d'au moins une portion de déploiement dans la structure fibreuse, ladite au moins une portion de déploiement (221) étant liée par tissage à une ou plusieurs portions adjacentes (230) de la structure fibreuse, les fils de trame des colonnes de fils de trame (C_{T230}) de la ou les portions adjacentes (230) étant juxtaposés suivant une première direction de superposition (D_{S230}) perpendiculaire à la direction longitudinale (D_{L}),
**caractérisé en ce que**, lors du tissage de ladite au moins une portion de déploiement (221), les fils de trame de chaque colonne de fils de trame (C_{T221}) sont juxtaposés suivant une deuxième direction de superposition (D_{S221}) différente de la première direction de superposition (D_{S230}).

2. Procédé selon la revendication 1, dans lequel la deuxième direction de superposition (D_{S221}) forme un angle avec la direction longitudinale compris entre 60° et 80°.

3. Procédé de fabrication d'une pièce en matériau composite comprenant :
- le tissage d'une structure fibreuse (200) conformément au procédé de tissage selon la revendication 1 ou 2,
- la mise en forme de la structure fibreuse par pliage de ladite au moins une portion de déploiement (221) de manière à obtenir une préforme fibreuse,
- la densification de la préforme fibreuse par une matrice.

4. Utilisation du procédé de fabrication d'une pièce en matériau composite selon la revendication 3 pour la fabrication d'un secteur d'anneau de turbine, d'un raidisseur ou d'une aube de turbomachine fixe ou mobile.

5. Structure fibreuse (200) présentant un tissage tridimensionnel entre une pluralité de couches de fils de chaîne (203) et une pluralité de couches de fils de trame (204), les fils de chaîne s'étendant suivant une direction longitudinale (D_{L}), les fils de trame s'étendant suivant une direction transversale (D_{T}), la structure comprenant une pluralité de colonnes de fils de trame espacées les unes de autres suivant la direction longitudinale, les fils de trame de chaque colonne de fils de trame étant juxtaposés dans l'épaisseur de la structure fibreuse suivant une direction de superposition déterminée, la structure fibreuse comprenant au moins une portion de déploiement (221) liée par tissage à une ou plusieurs portions adjacentes (230) de la structure fibreuse (200), les fils de trame des colonnes de fils de trame (C_{T230}) de la ou les portions adjacentes étant juxtaposés suivant une première direction de superposition perpendiculaire (D_{S230}) à la direction longitudinale,
**caractérisée en ce que** les fils de trame de chaque colonne de fils de trame (C_{T221}) dans ladite au moins une portion de déploiement (221) sont juxtaposés suivant une deuxième direction de superposition (D_{S221}) différente de la première direction de superposition (D_{S230}).

6. Structure selon la revendication 5, dans laquelle la deuxième direction de superposition forme un angle avec la direction longitudinale compris entre 60° et 80°.

7. Pièce en matériau composite comprenant un renfort fibreux densifié par une matrice **caractérisée en ce que** le renfort fibreux comprend une structure fibreuse selon la revendication 5 ou 6.

8. Pièce selon la revendication 7, la pièce correspondant à un secteur d'anneau de turbine, un raidisseur ou une aube de turbomachine fixe ou mobile.

## Patentansprüche

1. Verfahren zum dreidimensionalen Weben einer Faserstruktur (200) in einem einzigen Teil zwischen einer Vielzahl von Kettfadenschichten (203) und einer Vielzahl von Schussfadenschichten (204), wobei sich die Kettfäden in einer Längsrichtung (D_{L}) erstrecken, die der Vorschubrichtung der Kettfäden entspricht, wobei sich die Schussfäden in einer Querrichtung (D_{T}) erstrecken, wobei die Schussfäden (204) in eine Vielzahl von voneinander in der Längsrichtung beabstandeten Säulen eingewebt sind, wobei jede Schussfadensäule an der Webkante der Faserstruktur positioniert ist, wobei die Schussfäden jeder Schussfadensäule in der Dicke der Faserstruktur in einer bestimmten Stapelrichtung nebeneinander angeordnet sind, wobei das Verfahren das Weben mindestens eines Entfaltungsabschnitts in der Faserstruktur umfasst, wobei der mindestens eine Entfaltungsabschnitt (221) durch Weben mit einem oder mehreren angrenzenden Abschnitten (230) der Faserstruktur verbunden ist, wobei die Schussfäden der Schussfadensäulen (C_{T230}) des oder der angrenzenden Abschnitte (230) in einer ersten Stapelrichtung (D_{S230}), die senkrecht zu der Längsrichtung (D_{L}) ist, nebeneinander angeordnet sind,
**dadurch gekennzeichnet, dass** beim Weben des mindestens einen Entfaltungsabschnitts (221) die Schussfäden jeder Schussfadensäule (C_{T221}) in einer zweiten Stapelrichtung (D_{S221}), die von der ersten Stapelrichtung (D_{S230}) verschieden ist, nebeneinander angeordnet sind.

2. Verfahren nach Anspruch 1, wobei die zweite Stapelrichtung (D_{S221}) mit der Längsrichtung einen Winkel zwischen 60° und 80° bildet.

3. Verfahren zur Herstellung eines Bauteils aus Verbundmaterial, das umfasst:
- das Weben einer Faserstruktur (200) gemäß dem Webverfahren nach Anspruch 1 oder 2,
- das Formen der Faserstruktur durch Falten des mindestens einen Entfaltungsabschnitts (221), um einen Faser-Vorformling zu erhalten,
- das Verdichten des Faser-Vorformlings durch eine Matrix.

4. Verwendung des Verfahrens zur Herstellung eines Bauteils aus Verbundmaterial nach Anspruch 3 zur Herstellung eines Turbinenringsektors, einer Versteifung oder einer festen oder beweglichen Turbomaschinenschaufel.

5. Faserstruktur (200), die eine dreidimensionale Webung zwischen einer Vielzahl von Kettfadenschichten (203) und einer Vielzahl von Schussfadenschichten (204) aufweist, wobei sich die Kettfäden in einer Längsrichtung (D_{L}) erstrecken, wobei sich die Schussfäden in einer Querrichtung (D_{T}) erstrecken, wobei die Struktur eine Vielzahl von voneinander in der Längsrichtung beabstandeten Schussfadensäulen umfasst, wobei die Schussfäden jeder Schussfadensäule in der Dicke der Faserstruktur in einer bestimmten Stapelrichtung nebeneinander angeordnet sind, wobei die Faserstruktur mindestens einen Entfaltungsabschnitt (221) umfasst, der durch Weben mit einem oder mehreren angrenzenden Abschnitten (230) der Faserstruktur (200) verbunden ist, wobei die Schussfäden der Schussfadensäulen (C_{T230}) des oder der angrenzenden Abschnitte in einer ersten Stapelrichtung (D_{S230}), die senkrecht zu der Längsrichtung ist, nebeneinander angeordnet sind,
**dadurch gekennzeichnet, dass** die Schussfäden jeder Schussfadensäule (C_{T221}) in dem mindestens einen Entfaltungsabschnitt (221) in einer zweiten Stapelrichtung (D_{S221}), die von der ersten Stapelrichtung (D_{S230}) verschieden ist, nebeneinander angeordnet sind.

6. Struktur nach Anspruch 5, wobei die zweite Stapelrichtung mit der Längsrichtung einen Winkel zwischen 60° und 80° bildet.

7. Bauteil aus Verbundmaterial, das ein durch eine Matrix verdichtetes Faserverstärkungsmaterial umfasst, **dadurch gekennzeichnet, dass** das Faserverstärkungsmaterial eine Faserstruktur nach Anspruch 5 oder 6 umfasst.

8. Bauteil nach Anspruch 7, wobei das Bauteil einem Turbinenringsektor, einer Versteifung oder einer festen oder beweglichen Turbomaschinenschaufel entspricht.

## Claims

1. A method for three-dimensional weaving in one piece of a fibrous structure (200) between a plurality of layers of warp yarns (203) and a plurality of layers of weft yarns (204), the warp yarns extending in a longitudinal direction (D_{L}) corresponding to the direction of travel of said warp yarns, the weft yarns extending in a transverse direction (D_{T}), the weft yarns (204) being woven in a plurality of columns spaced apart from one another in the longitudinal direction, each weft yarn column being positioned against the fell of the fibrous structure, the weft yarns of each weft yarn column being juxtaposed in the thickness of the fibrous structure in a determined stacking direction, the method comprising weaving at least one deployment portion in the fibrous structure, said at least one deployment portion (221) being interwoven with one or more adjacent portions (230) of the fibrous structure, the weft yarns of the weft yarn columns (C_{T230}) of the adjacent portion(s) (230) being juxtaposed in a first stacking direction (D_{S230}) perpendicular to the longitudinal direction (D_{L}),
**characterized in that**, during the process of weaving said at least one deployment portion (221), the weft yarns of each weft yarn column (C_{T221}) are juxtaposed in a second stacking direction (D_{S221}) different from the first stacking direction (D_{S230}).

2. The method according to claim 1, wherein the second stacking direction (D_{S221}) forms an angle with the longitudinal direction comprised between 60° and 80°.

3. A method for manufacturing a part made of composite material comprising:
- weaving a fibrous structure (200) in accordance with the weaving method according to claim 1 or 2,
- shaping the fibrous structure by folding said at least one deployment portion (221) so as to obtain a fibrous preform,
- densifying the fibrous preform by a matrix.

4. A use of the method for manufacturing a part made of composite material according to claim 3 for the manufacture of a turbine ring sector, a stiffener or a stationary or moving turbomachine blade.

5. A fibrous structure (200) having a three-dimensional weave between a plurality of layers of warp yarns (203) and a plurality of layers of weft yarns (204), the warp yarns extending in a longitudinal direction (D_{L}), the weft yarns extending in a transverse direction (D_{T}), the structure comprising a plurality of weft yarn columns spaced apart from one another in the longitudinal direction, the weft yarns of each weft yarn column being juxtaposed in the thickness of the fibrous structure in a determined stacking direction, the fibrous structure comprising at least one deployment portion (221) interwoven with one or more adjacent portions (230) of the fibrous structure (200), the weft yarns of the weft yarn columns (C_{T230}) of the adjacent portion(s) being juxtaposed in a first stacking direction perpendicular (D_{S230}) to the longitudinal direction, **characterized in that** the weft yarns of each weft yarn column (C_{T221}) in said at least one deployment portion (221) are juxtaposed in a second stacking direction (D _{S221}) different from the first stacking direction (D_{S230}).

6. The structure according to claim 4, wherein the second stacking direction forms an angle with the longitudinal direction comprised between 60° and 80°.

7. A part made of composite material comprising a fibrous reinforcement densified by a matrix **characterized in that** the fibrous reinforcement comprises a fibrous structure according to claim 5 or 6.

8. The part according to claim 7, the part corresponding to a turbine ring sector, a stiffener or a stationary or moving turbomachine blade.
